# EUROPÄISCHE PATENTSCHRIFT

(11) **EP 2 841 824 B1**
(45) Veröffentlichungstag und Bekanntmachung des Hinweises auf die Patenterteilung: **02.03.2016**
(21) Anmeldenummer: 13711597.8
(22) Anmeldetag: 12.03.2013
(51) Int. Cl.: F16J 15/16, F16J 15/44

(54) **INNENSPANNENDER RECHTECKRING**
INWARDLY TENSIONING PLAIN COMPRESSION RING
ANNEAU À SECTION RECTANGULAIRE, À SERRAGE INTÉRIEUR

(30) Priorität: 24.04.2012 DE 102012206676
(43) Veröffentlichungstag der Anmeldung: 04.03.2015
(73) Patentinhaber: ZF Friedrichshafen AG, 80846 Friedrichshafen (DE)
(72) Erfinder: MAYER, Juergen, 6912 Hoerbranz (AT)
(86) Internationale Anmeldenummer: PCT/EP2013/054945
(87) Internationale Veröffentlichungsnummer: WO 2013/159984

(56) Entgegenhaltungen:
- EP-A1- 1 536 167
- EP-A1- 1 541 908
- DE-A1-102009 012 462
- US-A- 5 934 680

## Beschreibung

Die Erfindung betrifft einen innenspannenden Rechteckring zur Abdichtung eines drehenden Bauteils gegenüber einem stehenden Bauteil gemäß dem Oberbegriff des Patentanspruchs 1, und wie er aus der EP154 1908A bekannt ist.

Derartige Rechteckringe werden beispielsweise in der Getriebetechnik als Dichtelemente zur Abdichtung eines feststehenden Flansches gegenüber einer drehbaren Welle bei einer Druck- und Schmierölzuführung zu einer hydraulisch betätigten Kupplung genutzt. Der Rechteckring sitzt dabei üblicherweise in einer Umfangsnut, die im Flansch oder in der Welle ausgebildet ist. Der Rechteckring ist in dieser Nut mit axialem und radialem Spiel montiert, so dass Druck- und Schmieröl über einen Druckraum oder Überdruckbereich in die Ringnut eindringen kann. Meistens ist ein solcher Rechteckring geschlitzt bzw. geteilt sowie in sich federnd ausgebildet, so dass er sich im Falle eines innenspannenden Rings mit seiner radial inneren Mantel- bzw. Umfangsfläche an eine radiale Außenfläche eines der beiden Bauteile spannend anlegt, und sich im Falle eines außenspannenden Rings mit seiner radial äußeren Mantel- bzw. Umfangsfläche an eine radiale Innenfläche eines der beiden zugeordneten Bauteile spannend anlegt. In axialer Richtung legt sich der Rechteckring durch die Einwirkung der aus dem Überdruckbereich zugeführten Druckflüssigkeit mit einer axialen Umfangsfläche an eine Seitenfläche der Nut an.

Je nach gewünschter Anordnung ruht entweder die radial anliegende Umfangsfläche oder die axial anliegende Umfangsfläche des Rechteckrings gegenüber einem der beiden Bauteile. Dementsprechend wirkt die jeweils andere der radialen Umfangsfläche und der axialen Umfangsfläche als eine dichtende Gleitfläche bei einer Relativdrehung der beiden Bauteile. Um die thermische Belastung zu begrenzen, die an der jeweiligen Gleitfläche aufgrund der erzeugten Reibleistung entsteht, kann der Gleitfläche zur Abfuhr der Wärme Schmieröl zugeführt werden.

Es ist bekannt, an der Gleitfläche eines Rechteckrings über seinen Umfang verteilt einzelne, taschenförmige Vertiefungen zur Aufnahme eines Schmiermittels anzuordnen, die mit einem Druckraum für das Schmiermittel verbunden sind.

Die DE 39 04 978 C2 zeigt einen solchen Dichtring, der zwei Räume mit unterschiedlichen Druckniveaus axial voneinander trennt, wobei die beiden Räume von einer Welle und einer diese aufnehmenden Nabe radial begrenzt sind. Der Dichtring sitzt in einer Ringnut, die an der Welle angeordnet ist. Der Dichtring ist als ein offener und außenspannender Ring ausbildet, so dass er mit seiner radial äußeren Mantelfläche dichtend an der Wand einer Nabenbohrung und ruhend gegenüber der Nabenbohrung anliegt. Axial wird der Dichtring durch den auf höherem Druckniveau liegenden Bereich an eine Seitenwand der Nut gleitend angelegt. In der gleitenden Dichtfläche des Rings sind über den Umfang verteilt taschenförmige Ausnehmungen eingebracht, die gegen den unter höherem Druck stehenden Bereich offen sind.

Weiterhin ist es bekannt, am Umfang eines Rechteckrings eine durchgehende ringförmige Schmiernut oder Vertiefung auszubilden, die mit einem Druckraum verbunden ist. Dadurch wird gegenüber einer segmentierten Schmierung, wie im Falle von Schmiertaschen, ein effektiverer, umfangsbezogen durchgehender Schmierfilm an der Gleitfläche erzeugt. Durch eine Druckbeaufschlagung der Schmiernut kann zudem die Anpresskraft an die Gleitfläche über den Umfang gleichmäßig verringert werden, wodurch sich Reibverluste weiter reduzieren lassen.

Die DE 10 56 440 A zeigt einen solchen Rechteckring, der außenspannend gegenüber einem Maschinenteil in einer Nut sitzt, die in einer Welle ausgebildet ist. Der Dichtring weist an einer der beiden axialen Umfangsflächen, die eine Gleitfläche bildet, eine durchgehende ringförmige Schmiernut auf. Die Schmiernut ist über radiale Zuführkanäle, die an der betreffenden Stirnfläche des Rings ausgebildet sind, mit einer Druckund Schmierflüssigkeit beaufschlagbar.

Aus der DE 21 46 026 C2 ist ein offener, außenspannender Rechteckring bekannt, der zwischen zwei relativ zueinander drehenden Bauteilen angeordnet ist. Der Rechteckring sitzt in einer in einem der beiden Bauteile ausgebildeten Nut, wobei auf der einen axialen Seite ein höherer Druck wirkt als auf der gegenüberliegenden Seite. Die axiale Niederdruckseite des Dichtrings ist mit einer Umfangsnut versehen, die über durch den Dichtungsring hindurchführende Kanäle mit dem höheren Druck beaufschlagbar ist. Der Dichtring kann zusätzlich an seiner radial äußeren Umfangsfläche mit einer Ringnut versehen sein, die über Kanäle mit dem höheren Druck beaufschlagbar ist. Ein damit vergleichbarer Rechteckring ist auch aus der US 3 315 968 A bekannt.

Bei einem geschlitzten Rechteckring können seine beiden umfangsbezogen gegenüberliegenden Enden einen einfachen offenen Ring mit einem Stoßspalt bilden. Bereits bekannt sind auch Rechteckringe, beispielsweise Kolbenringe, bei denen die beiden umfangsbezogen gegenüberliegenden Enden als Schloss ausgebildet sind. Die Ringenden derartiger Ringe können bei Vorhandensein einer Eigenfederung des Rings durch Überwinden der Eigenfederung zusammenführbar oder voneinander trennbar sein.

Die DE 10 2009 012 462 A1 zeigt eine Drehdurchführung mit einem solchen Rechteckring, der zwischen einem Rotor als drehendem Bauteil und einem Stator als stehendem Bauteil angeordnet ist, wobei der Stator den Rotor umgreift. Gemäß eines Ausführungsbeispiels sitzt der Rechtreckring in einer Umfangsnut des Rotors. Durch Druckeinwirkung über einen Ölführungskanal wird der Rechteckring axial mit seiner von dem Ölführungskanal abgewandten axialen Umfangsfläche gegen die Wand der Nut gedrückt und mit seiner radial äußeren Umfangsfläche gegen eine Innenfläche des Stators angelegt. Aufgrund unterschiedlicher Abmessungen des Ringquerschnitts in der Höhe und der Breite wirken auf den Ring resultierende Flächenkräfte, die in axialer Richtung und in radialer Richtung unterschiedlich sind. Durch eine geringere Breite als Höhe ergibt sich gegenüber dem Rotor ein axialer statischer Dichtbereich, der den Rechteckring gegenüber diesem Bauteil festsetzt, sowie gegenüber dem Stator ein radial äußerer dynamischer Dichtbereich, der den Rechteckring gegenüber diesem Bauteil gleiten lässt. Zumindest der dynamische Dichtbereich ist zur Erzeugung einer gezielten Leckage zum Kühlen und Schmieren mit mindestens einer Ausnehmung versehen. Der Rechteckring weist ein Stoß oder Schloss auf, das als Montagehilfe dient. Die Ausnehmung ist taschenförmig ausgebildet und befindet sich gemäß einer dortigen Variante am äußeren Kreisumfang des Rechteckrings als integrierter Bestandteil der Konstruktion des Stoßes oder Schlosses.

Vor diesem Hintergrund liegt der Erfindung die Aufgabe zugrunde, einen innenspannenden Rechteckring zur Abdichtung eines drehenden Bauteils gegenüber einem stehenden Bauteil zu schaffen, der verschleißarm, montagefreundlich und kostengünstig in der Herstellung ist.

Die Lösung dieser Aufgabe ergibt sich aus den Merkmalen des Hauptanspruchs, während vorteilhafte Ausgestaltungen und Weiterbildungen der Erfindung den Unteransprüchen entnehmbar sind.

Der Erfindung liegt die Erkenntnis zugrunde, dass bei einem Rechteckring mit integrierter Schmiereinrichtung sowie Stoß oder Schloss, die Schmiereinrichtung zur Zuführung des Schmiermittels durch eine besondere Konstruktion mit einem Leckagebereich des Stoßes bzw. Schlosses verbunden werden kann.

Demnach geht die Erfindung aus von einem innenspannenden Rechteckring zur Abdichtung eines drehenden Bauteils gegenüber einem stehenden Bauteil, wobei der Rechteckring einen Überdruckbereich von einem Niederdruckbereich trennt, wobei der Rechteckring zwei umfangsbezogen gegenüberliegende Enden aufweist, die als Stoß oder Schloss ausgebildet sowie miteinander verbindbar sind, und wobei an einer radial inneren Umfangsfläche oder an zumindest einer axialen Umfangsfläche des Rechteckrings wenigstens eine ringförmige Schmiernut zur Aufnahme eines aus dem Überdruckbereich zuführbaren Schmiermittels ausgebildet ist.

Zur Lösung der gestellten Aufgabe sieht die Erfindung vor, dass die zumindest eine ringförmige Schmiernut nicht vollständig kreisförmig ausgebildet ist sondern ein geschlossenes Ende sowie ein offenes Ende aufweist, wobei das offene Ende der ringförmigen Schmiernut in einen Überströmbereich übergeht, welcher mit einem Leckagebereich des Stoßes oder Schlosses in Strömungsverbindung ist.

Bei diesem Rechteckring wird die Reibung an einer Gleitfläche durch eine Schmierungseinrichtung reduziert, die einen durchgehenden Schmierfilm und damit eine kontinuierliche effektive Schmierung über den Umfang erzeugt, dazu aber keine zusätzlichen Bohrungen, Kanäle oder dergleichen zur Versorgung mit dem Schmiermittel benötigt, wodurch sich die Herstellungskosten des Rings reduzieren. Vielmehr wird ein einfach realisierbarer Leckagebereich eines aus Montage-, Fertigungs- oder Qualitätsgründen meistens ohnehin vorhandenen Stoßes oder Schlosses genutzt, um einen Überströmbereich anzuschließen, der die Schmiernut versorgt.

Durch eine mittels des aus einem Überdruckbereich zugeführten Schmiermittels erfolgende Schmierung und gleichzeitige Druckbeaufschlagung der Ring- bzw. Schmiernut wird zudem die Anpresskraft des Rechteckrings an der betreffenden Gleitfläche reduziert, welches sich zusätzlich verschleißmindernd auswirkt.

Die beiden Ringenden sind über den Stoß oder das Schloss miteinander verbindbar, wobei ein als Leckagebereich wirksames Spiel im Stoß oder Schloss verbleibt. Dieser Leckagebereich des Stoßes oder Schlosses verbindet demnach eine Überdruckseite mit einer Niederdruckseite des Rechteckrings strömungstechnisch, so dass durch den Überströmbereich der ringförmigen Umfangsnut des Rechteckrings stets ausreichend und zuverlässig Schmiermittel zuführbar ist.

Gemäß einer bevorzugten Ausführungsform der Erfindung ist vorgesehen, dass die beiden Ringenden des Rechteckrings als ein T-Schloss ausgebildet sind, wobei ein erstes Ringende einen T-förmigen Querschnitt aufweist, dessen kurzer Schenkel radial außen und dessen langer Schenkel radial innen angeordnet ist, und bei dem die beiden Schenkel in Umfangsrichtung einen Fortsatz des Ringendes bilden. Außerdem ist vorgesehen, dass das zweite Ringende als eine Aufnahme für diesen Fortsatz ausgebildet ist, wobei der lange Schenkel in die Aufnahme eingreift und der kurze Schenkel die Aufnahme radial außen überlappt. Weiter ist vorgesehen, dass das offene Ende der Schmiernut an dem zweiten Ringende angeordnet ist, so dass an der radial äußeren Umfangsfläche des Rechteckrings, in einem offen bleibenden Endbereich des T-Schlosses, ein Leckagebereich ausgebildet ist, der von dem Überdruckbereich mit Schmiermittel beaufschlagt ist und der den Überströmbereich der Schmiernut mit Schmiermittel speist.

Die Ringenden können in Umfangsrichtung abgerundete oder gebrochene Kanten aufweisen, wodurch sie besonders leicht ineinander greifen.

Durch die T-Schlosskontur wird eine geführte Verbindung der Ringenden erreicht. Dadurch ist sichergestellt, dass sich die Ringenden bei der Montage oder im montierten Zustand nicht axial gegeneinander verschieben und unkontrollierte Leckageverluste oder unerwünschte Klemmkräfte verursachen. Gleichzeitig sind die beiden Ringenden derart konzipiert, dass auch in vollständig zusammengeschobenem Zustand der Ringenden ein Leckagebereich zur Speisung des Überströmbereichs der Schmiernut verbleibt.

Die Geometrie des T-Schlosses ermöglicht ohne zusätzlichen Aufwand eine konstruktiv einfache Realisierung eines begrenzten Leckagebereiches und eines daran angeschlossenen begrenzten Überströmbereiches. Grundsätzlich sind jedoch auch andere Stoß- bzw. Schlossarten, beispielsweise ein sogenanntes Doppelstufenschloss, zur Schmiermittezuführung der Schmiernut geeignet.

Der konstruktive Aufbau eines begrenzten Leckagebereichs und eines daran angeschlossenen begrenzten Überströmbereichs kann bei einer Schmiernut, die an einer radial inneren Umfangsfläche des Rechteckrings ausgebildet ist, dadurch konkretisiert sein, dass der Überströmbereich als ein spaltförmiger Raum ausgebildet ist, der sich an der inneren Umfangsfläche des Rechteckrings zwischen dem offenen Ende der Schmiernut und dem freien Ende des längeren Schenkels des T-Schlosses erstreckt, und der von den beiden Ringenden sowie von einer zu der radial inneren Umfangsfläche des Rechteckrings benachbarten Fläche eines der beiden gegeneinander abzudichtenden Bauteile begrenzt ist.

Bei dieser Ausführungsform ist die radial innere Umfangsfläche des Rechteckrings als eine Gleitfläche nutzbar, bei der durch die mit Schmiermittel gefüllte Schmiernut die Reibung verringert wird. Da der Rechteckring mit der radialen Schmiernut symmetrisch aufgebaut ist, ist der Einbau nicht richtungsgebunden, wodurch seine Montage erleichtert wird.

Bei einer Schmiernut, die an einer axialen Umfangsfläche des Rechteckrings ausgebildet ist, welche von dem Überdruckbereich abgewandt ist, kann der begrenzte Leckagebereich und der daran angeschlossene Überströmbereichs dadurch realisiert sein, dass der Überströmbereich als ein spaltförmiger Raum ausgebildet ist, der sich an der axialen Umfangsfläche zwischen dem offenen Ende der Schmiernut sowie dem Ende des kürzeren Schenkels des T-Schlosses erstreckt, und der von den beiden Ringenden sowie einer zu der axialen Umfangsfläche benachbarten Fläche eines der beiden Bauteile begrenzt ist. Bei dieser Ausführungsform ist die axiale Umfangsfläche als eine Gleitfläche nutzbar, bei der durch die mit Schmiermittel gefüllte Schmiernut die Reibung verringert wird.

Um auch bei einer axialen Gleitfläche des Rechteckrings einen richtungsungebundenen Einbau zu ermöglichen, kann vorgesehen sein, dass an der von dem Überdruckbereich abgewandten axialen Umfangsfläche und an der dem Überdruckbereich zugewandten, gegenüberliegenden axialen Umfangsfläche des Rechteckrings jeweils eine ringförmige Schmiernut ausgebildet ist, wobei die beiden Schmiernuten über den Leckagebereich miteinander in Strömungsverbindung sind. Durch die Ausbildung einer zweiten Schmiernut wird zudem das Gewicht des Rechteckrings verringert.

Grundsätzlich ist auch ein Rechteckring mit einer radialen Schmiernut und einer oder zwei axialen Schmiernuten möglich.

Der Rechteckring gemäß der Erfindung kann in verschiedenen Dichtsystemen verbaut werden. Anwendungen, in denen Rechteckringe stark beansprucht sind und die eine entsprechend intensive Schmierung erfordern, ergeben sich in der Getriebetechnik von Fahrzeugen. Beispielsweise kann ein Rechteckring gemäß der Erfindung zur Abdichtung einer drehenden Welle gegenüber einem stehenden Flansch für eine Druckölzuführung einer hydraulisch betätigten Kupplung dienen. Dabei sitzt der Rechteckring mit axialem und radialem Spiel in einer in dem Flansch eingebrachten Nut, wobei er durch Druckbeaufschlagung an einer von einem Überdruckbereich abgewandten axialen Umfangsfläche an einer Seitenfläche der Nut ruhend oder gleitend anliegt, und durch Druckbeaufschlagung und/oder Eigenfederung mit einer radial inneren Umfangsfläche an einer Außenfläche der Welle spannend sowie ruhend oder gleitend anliegt.

Bei einer solchen Anordnung können auch zwei oder mehr solcher Rechteckringe verbaut sein, wobei ein Überdruckbereich axial zwischen den Rechteckringen und ein Niederdruckbereich axial außerhalb der Rechteckringe liegt.

Zur weiteren Verdeutlichung der Erfindung ist der Beschreibung eine Zeichnung mit zwei Ausführungsbeispielen beigefügt. In dieser zeigt
- Fig. 1: eine erste Ausführungsform mit zwei innenspannenden Rechteckringen gemäß der Erfindung im eingebauten Zustand in einem Querschnitt,
- Fig. 2: eine teilweise Seitenansicht des Rechteckrings der Fig. 1 mit einem T-Schloss,
- Fig. 3: eine vergrößerte Darstellung des Rechteckrings der Fig. 2 in einer perspektivischen Ansicht im Bereich des T-Schlosses,
- Fig. 4: eine zweite Ausführungsform mit zwei innenspannenden Rechteckringen gemäß der Erfindung im eingebauten Zustand in einem Querschnitt,
- Fig. 5: eine teilweise Seitenansicht des Rechteckrings der Fig. 4 mit einem T-Schloss, und
- Fig. 6: eine vergrößerte Darstellung des Rechteckrings der Fig. 5 in einer perspektivischen Ansicht im Bereich des T-Schlosses.

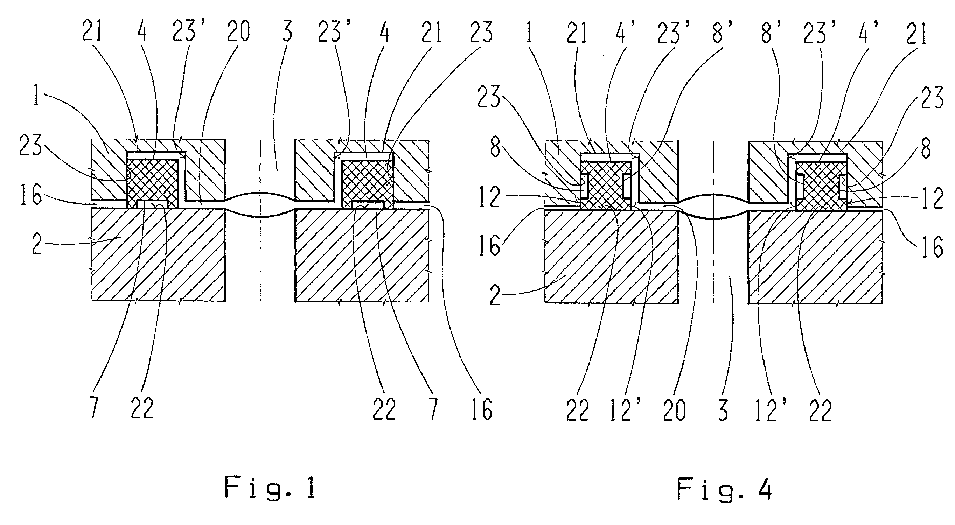

Demnach sind bei einer in Fig. 1 schematisch dargestellten Druckölzuführung zwei innenspannende Rechteckringe 4 zur Abdichtung einer drehenden Welle 2 gegenüber einem stehenden Flansch 1 verbaut. Die beiden Rechteckringe 4 trennen einen sich zwischen den Rechteckringen 4 erstreckenden Überdruckbereich beziehungsweise Druckraum 3 von einem axial außerhalb der beiden Rechteckringe 4 sich erstreckenden Niederdruckbereich 16. Der Druckraum 3 ist mit einem unter Druck stehenden Schmiermittel gefüllt. Von dem Druckraum 3 wird Schmiermittel über einen radialen Umfangsspalt 20 zwischen der Welle 2 und dem Flansch 1 an die beiden Rechteckringe 4 geführt. Die beiden Rechteckringe 4 sitzen mit axialem und radialem Spiel jeweils in einer Nut 21, welche in den Flansch 1 eingebracht ist, und sind gegenüber einer radialen Außenfläche 22 der Welle 2 durch ihre Eigenfederung vorgespannt. Durch die Druckbeaufschlagung durch das Schmiermittel sind die beiden Rechteckringe 4 jeweils auf der von dem Druckraum 3 abgewandten Seite axial an eine Seitenwand 23 der Nut 21 angelegt. Die Rechteckringe 4 sind somit nach axial außen und radial innen als Dichtringe wirksam.

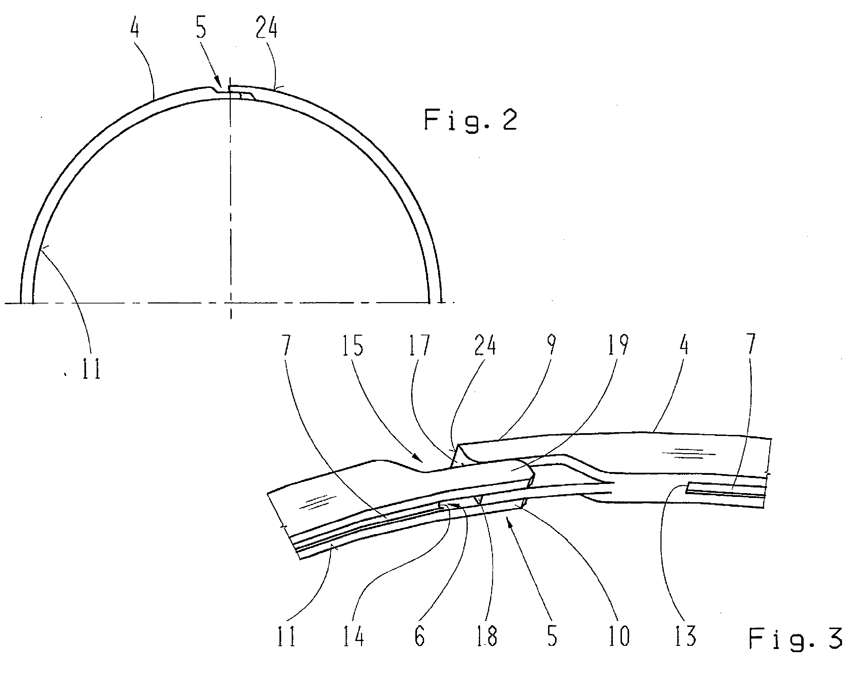

An ihrer radial inneren Umfangsfläche 11 (Fig. 3) weisen die Rechteckringe 4 jeweils eine ringförmige Schmiernut 7 auf, durch die Schmiermittel leitbar ist. Die Kontaktfläche zwischen der radial inneren Umfangsfläche 11 und der Außenfläche 22 der Welle 2 bildet demnach eine Gleitfläche, während der Rechteckring 4 axial an dem Flansch 1 ruht.

Der Aufbau der Rechteckringe 4 geht aus den Figuren 2 und 3 genauer hervor. Demnach ist der Rechteckring 4 radial geschlitzt ausgebildet und weist daher zwei umfangsbezogen gegenüberliegende Enden 9, 10 auf, die als ein T-Schloss 5 ausgebildet sind. Das erste Ringende 9 weist einen T-förmigen Querschnitt auf, wobei der kürzere axiale Schenkel 17 radial außen angeordnet ist und der längere Schenkel 18 radial nach innen weist. Die beiden Schenkel 17, 18 bilden in Umfangsrichtung einen Fortsatz des ersten Ringendes 9. Das gegenüberliegende zweite Ringende 10 weist eine zu dem Fortsatz passende, zweischenklige Aufnahme 19 auf, wobei der lange Schenkel 18 des T-Schlosses 5 zwischen die beiden Schenkel der Aufnahme 19 eingreift und der kurze Schenkel 17 des T-Schloss 5 die Aufnahme 19 radial außen überlappt. Der lange Schenkel 18 wirkt demnach als eine Führung des T-Schlosses 5.

Die Schmiernut 7, die an der radial inneren Umfangsfläche 11 des Rechteckrings 4 ausgebildet ist, besitzt umfangsbezogen ein offenes Ende 14 und ein geschlossenes Ende 13, wobei das geschlossene Ende 13 zu dem T-förmigen ersten Ringende 9 und das offene Ende 14 zu dem aufnahmeförmigen zweiten Ringende 10 benachbart ist.

Im geschlossenen oder teilgeschlossenem Zustand des Rechteckrings 4 ist am äußeren Kreisumfang bzw. an dessen äußere Umfangsfläche 24 im Bereich des T-Schlosses 5 seitens des aufnahmeförmigen zweiten Ringendes 10 ein Leckagebereich 15 ausgebildet, der über den Druckraum 3 mit Schmiermittel beaufschlagt wird. Der Leckagebereich 15 ist mit einem Überströmbereich 6 in Strömungsverbindung. Der Überströmbereich 6 ist als spaltförmiger Raum ausgebildet, der sich im Wesentlichen an der inneren Umfangsfläche 11 des Rechteckrings 4 zwischen dem offenen Ende 14 der Schmiernut 7 und dem freien Ende des längeren Schenkels 18 des T-Schlosses 5 erstreckt. Der Überströmbereich 6 ist von den beiden Ringenden 9, 10 sowie von der zu der radial inneren Umfangsfläche 11 benachbarten Außenfläche 22 der Welle 2 begrenzt und geht in das offene Ende 14 der Schmiernut 7 über. Die Schmiernut 7 wird daher im Betrieb über den Druckraum 3 und das T-Schloss 5 permanent mit Schmiermittel versorgt und bildet einen Schmierfilm an der radial inneren Umfangsfläche 11 des Rechteckrings 4.

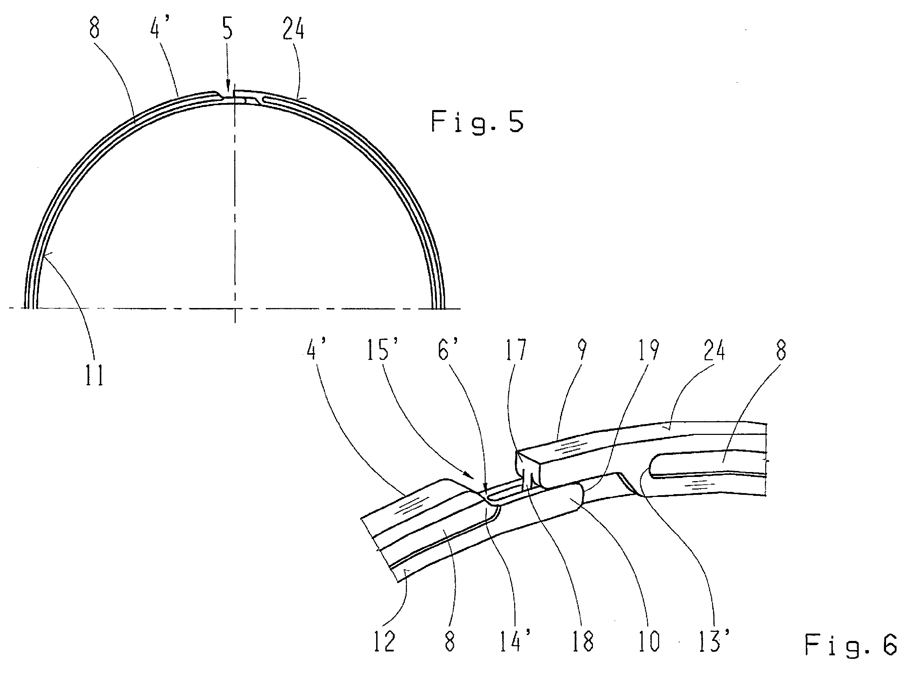

Fig. 4 zeigt eine zur Fig. 1 weitgehend baugleiche Druckölzuführung, allerdings mit axialen Gleitflächen. Darin sind zwei Rechteckringe 4' verbaut, deren Aufbau in den Figuren 5 und 6 im Detail dargestellt ist.

Demnach weist der Rechteckring 4' an einer axialen Umfangsfläche 12 eine ringförmige Schmiernut 8 auf. Diese axiale Umfangsfläche 12 bildet mit der Seitenwand 23 der Nut 21 des stehenden Bauteils 1, in welcher der Ring 4' sitzt, eine axiale Gleitfläche. Das T-Schloss 5 entspricht der Ausführungsform von Fig. 2 und Fig. 3. Die Schmiernut 8 besitzt wiederum ein geschlossenes Ende 13' seitens des T-förmigen ersten Ringendes 9 und ein offenes Ende 14' seitens des als Aufnahme 19 ausgebildeten zweiten Ringendes 10. Das offene Nutende 14' geht in einen Überströmbereich 6' über, der mit einem Leckagebereich 15' am äußeren Kreisumfang (äußere Umfangsfläche 24) des Rechteckrings 4' strömungsverbunden ist.

An der gegenüberliegenden axialen Umfangsfläche 12' des Rechteckrings 4' ist eine entsprechende zweite Schmiernut 8' ausgebildet, die mit der ersten Schmiernut 8 über den Leckagebereich 15' strömungsverbunden ist (siehe Fig. 4). Beide Schmiernuten 8, 8' können die gleiche Funktion erfüllen, so dass der Einbau des Rechteckrings 4' richtungsunabhängig erfolgen kann.

### Bezugszeichen

- 1: Stehendes Bauteil, Flansch
- 2: Drehendes Bauteil, Welle
- 3: Überdruckbereich, Druckraum
- 4, 4': Rechteckring
- 5: Stoß, Schloss
- 6, 6': Überströmbereich
- 7: Radiale Schmiernut
- 8, 8': Axiale Schmiernut
- 9: Erstes Ringende
- 10: Zweites Ringende
- 11: Radial innere Umfangsfläche
- 12, 12': Axiale Umfangsfläche
- 13, 13': Geschlossenes Nutende
- 14, 14': Offenes Nutende
- 15, 15': Leckagebereich
- 16: Niederdruckbereich
- 17: Kurzer Schenkel des T-Schlosses 5
- 18: Langer Schenkel des T-Schlosses 5
- 19: Aufnahme
- 20: Spalt
- 21: Nut im stehenden Bauteil 1
- 22: Außenfläche
- 23, 23': Seitenwand in der Nut 21 des stehenden Bauteils 1
- 24: Äußeren Umfangsfläche des Rechteckrings

## Patentansprüche

1. Innenspannender Rechteckring (4, 4') zur Abdichtung eines drehenden Bauteils (2) gegenüber einem stehenden Bauteil (1), wobei der Rechteckring einen Überdruckbereich (3) von einem Niederdruckbereich (16) trennt, wobei der Rechteckring zwei umfangsbezogen gegenüberliegende Enden (9, 10) aufweist, die als Stoß oder Schloss (5) ausgebildet sowie miteinander verbindbar sind, und wobei an einer radial inneren Umfangsfläche (11) oder an zumindest einer axialen Umfangsfläche (12, 12') des Rechteckrings (4, 4') wenigstens eine ringförmige Schmiernut (7; 8, 8') zur Aufnahme eines aus dem Überdruckbereich (3) zuführbaren Schmiermittels ausgebildet ist, **dadurch gekennzeichnet, dass** die zumindest eine ringförmige Schmiernut (7; 8, 8') nicht vollständig kreisförmig ausgebildet ist sondern ein geschlossenes Ende (13, 13') sowie ein offenes Ende (14, 14') aufweist, wobei das offene Ende (14, 14') der Schmiernut (7; 8, 8') in einen Überströmbereich (6, 6') übergeht, welcher mit einem Leckagebereich (15, 15') des Stoßes oder Schlosses (5) in Strömungsverbindung ist.

2. Innenspannender Rechteckring nach Anspruch 1, **dadurch gekennzeichnet, dass** die Ringenden (9, 10) als ein T-Schloss (5) ausgebildet sind, wobei ein erstes Ringende (9) einen T-förmigen Querschnitt aufweist, dessen kurzer Schenkel (17) radial außen und dessen langer Schenkel (18) radial innen angeordnet ist sowie die beiden Schenkel (17, 18) in Umfangsrichtung einen Fortsatz des Ringendes (9) bilden, wobei das zweite Ringende (10) als eine Aufnahme (19) für diesen Fortsatz ausgebildet ist, wobei der lange Schenkel (18) in die Aufnahme (19) eingreift und der kurze Schenkel (17) die Aufnahme (19) radial außen überlappt, und bei dem das offene Ende (14, 14') der Schmiernut (7, 8) an diesem zweiten Ringende (10) angeordnet ist, so dass an der radial äußeren Umfangsfläche (24) des Rechteckrings (4, 4'), in einem offen bleibenden Endbereich des T-Schlosses (5), ein Leckagebereich (15, 15') ausgebildet ist, der von dem Überdruckbereich (3) mit Schmiermittel beaufschlagt ist und der den Überströmbereich (6, 6') der Schmiernut (7, 8) mit Schmiermittel speist.

3. Innenspannender Rechteckring nach Anspruch 1 oder 2, **dadurch gekennzeichnet, dass** die beiden Ringenden (9, 10) in Umfangsrichtung abgerundete oder gebrochene Kanten aufweisen.

4. Innenspannender Rechteckring nach Anspruch 1 oder 2, **dadurch gekennzeichnet, dass** die beiden Ringenden (9, 10) in Umfangsrichtung gebrochene Kanten aufweisen.

5. Innenspannender Rechteckring nach einem der Ansprüche 1 bis 4, **dadurch gekennzeichnet, dass** die zumindest eine ringförmige Schmiernut (7) an einer radial inneren Umfangsfläche (11) des Rechteckring (4) ausgebildet ist, wobei der Überströmbereich (6) als ein spaltförmiger Raum ausgebildet ist, der sich an der inneren Umfangsfläche (11) des Rechteckring (4) zwischen dem offenen Ende (14) der Schmiernut (7) sowie dem freien Ende des längeren Schenkels (18) des T-Schlosses (5) erstreckt und von den beiden Ringenden (9,10) sowie einer zu der radial inneren Umfangsfläche (11) benachbarten Fläche (22) eines der beiden gegeneinander abzudichtenden Bauteile (1, 2) begrenzt ist.

6. Innenspannender Rechteckring nach einem der Ansprüche 1 bis 4, **dadurch gekennzeichnet, dass** die zumindest eine ringförmige Schmiernut (8) an einer axialen Umfangsfläche (12) des Rechteckring (4') ausgebildet ist, die von dem Überdruckbereich (3) abgewandt ist, wobei der Überströmbereich (6') als ein spaltförmiger Raum ausgebildet ist, der sich an der axialen Umfangsfläche (12) des Rechteckring (4') zwischen dem offenen Ende (14') der Schmiernut (8) sowie dem Ende des kürzeren Schenkels (17) des T-Schlosses (5) erstreckt und von den beiden Ringenden (9,10) sowie einer zu der axialen Umfangsfläche (12) benachbarten Fläche (23) eines der beiden gegeneinander abzudichtenden Bauteile (1, 2) begrenzt ist.

7. Innenspannender Rechteckring nach Anspruch 6, **dadurch gekennzeichnet, dass** an der von dem Überdruckbereich (3) abgewandten axialen Umfangsfläche (12) und an der dem Überdruckbereich (3) zugewandten, gegenüberliegenden axialen Umfangsfläche (12') jeweils eine ringförmige Schmiernut (8, 8') ausgebildet ist, wobei die beiden Schmiernuten (8, 8') über den Leckagebereich (15') miteinander in Strömungsverbindung sind.

8. Innenspannender Rechteckring nach einem der Ansprüche 1 bis 7, **dadurch gekennzeichnet, dass** er zur Abdichtung einer drehenden Welle (2) gegenüber einem stehenden Flansch (1) angeordnet ist und mit axialem sowie radialem Spiel in einer in dem Flansch (1) eingebrachten Nut (21) sitzt, wobei er durch Druckbeaufschlagung mit einer von einem Überdruckbereich (3) abgewandten axialen Umfangsfläche (12) an einer Seitenfläche (23) der Nut (21) ruhend oder gleitend anliegt, und durch Druckbeaufschlagung und/oder Eigenfederung mit einer radial inneren Umfangsfläche (11) an einer Außenfläche (22) der Welle (2) spannend sowie ruhend oder gleitend anliegt.

## Claims

1. Internally tensioning rectangular ring (4, 4') for sealing a rotating component (2) with respect to a stationary component (1), the rectangular ring separating a positive pressure region (3) from a low pressure region (16), the rectangular ring having two ends (9, 10) which lie opposite one another in relation to the circumference, are configured as a butt joint or buckle (5) and can be connected to one another, and at least one annular lubricating groove (7; 8, 8') for receiving a lubricant which can be fed out of the positive pressure region (3) being configured on a radially inner circumferential face (11) or on at least one axial circumferential face (12, 12') of the rectangular ring (4, 4'), **characterized in that** the at least one annular lubricating groove (7; 8, 8') is not of completely circular configuration, but rather has a closed end (13, 13') and an open end (14, 14'), the open end (14, 14') of the lubricating groove (7; 8, 8') merging into a crossflow region (6, 6') which is flow-connected to a leakage region (15, 15') of the butt joint or buckle (5).

2. Internally tensioning rectangular ring according to Claim 1, **characterized in that** the ring ends (9, 10) are configured as a T-buckle (5), a first ring end (9) having a T-shaped cross section, the short limb (17) of which is arranged radially on the outside and the long limb (18) of which is arranged radially on the inside, and the two limbs (17, 18) forming a projection of the ring end (9) in the circumferential direction, the second ring end (10) being configured as a receptacle (19) for the said projection, the long limb (18) engaging into the receptacle (19) and the short limb (17) overlapping the receptacle (19) radially on the outside, and in which the open end (14, 14') of the lubricating groove (7, 8) is arranged at the said second ring end (10), with the result that a leakage region (15, 15') is configured on the radially outer circumferential face (24) of the rectangular ring (4, 4'), in an end region of the T-buckle (5), which end region remains open, which leakage region (15, 15') is loaded with lubricant from the positive pressure region (3) and feeds the crossflow region (6, 6') of the lubricating groove (7, 8) with lubricant.

3. Internally tensioning rectangular ring according to Claim 1 or 2, **characterized in that** the two ring ends (9, 10) have rounded or broken edges in the circumferential direction.

4. Internally tensioning rectangular ring according to Claim 1 or 2, **characterized in that** the two ring ends (9, 10) have broken edges in the circumferential direction.

5. Internally tensioning rectangular ring according to one of Claims 1 to 4, **characterized in that** the at least one annular lubricating groove (7) is configured on a radially inner circumferential face (11) of the rectangular ring (4), the crossflow region (6) being configured as a gap-shaped space which extends on the inner circumferential face (11) of the rectangular ring (4) between the open end (14) of the lubricating groove (7) and the free end of the longer limb (18) of the T-buckle (5) and is delimited by the two ring ends (9, 10) and a face (22), adjacent with respect to the radially inner circumferential face (11), of one of the two components (1, 2) which are to be sealed against one another.

6. Internally tensioning rectangular ring according to one of Claims 1 to 4, **characterized in that** the at least one annular lubricating groove (8) is configured on an axial circumferential face (12) of the rectangular ring (4'), which circumferential face (12) faces away from the positive pressure region (3), the crossflow region (6') being configured as a gap-shaped space which extends on the axial circumferential face (12) of the rectangular ring (4') between the open end (14') of the lubricating groove (8) and the end of the shorter limb (17) of the T-buckle (5) and being delimited by the two ring ends (9, 10) and a face (23), adjacent with respect to the axial circumferential face (12), of one of the two components (1, 2) which are to be sealed against one another.

7. Internally tensioning rectangular ring according to Claim 6, **characterized in that** in each case one annular lubricating groove (8, 8') is configured on the axial circumferential face (12) which faces away from the positive pressure region (3) and on the opposite axial circumferential face (12') which faces the positive pressure region (3), the two lubricating grooves (8, 8') being flow-connected to one another via the leakage region (15').

8. Internally tensioning rectangular ring according to one of Claims 1 to 7, **characterized in that** it is arranged in order to seal a rotating shaft (2) with respect to a stationary flange (1) and is seated with axial and radial play in a groove (21) which is made in the flange (1), the said rectangular ring bearing with an axial circumferential face (12) which faces away from a positive pressure region (3) in a stationary or sliding manner against a side face (23) of the groove (21) as a result of pressure loading, and bearing with a radially inner circumferential face (11) in a tensioning and stationary or sliding manner against an outer face (22) of the shaft (2) as a result of pressure loading and/or inherent resilience.

## Revendications

1. Anneau de section rectangulaire à serrage interne (4, 4') pour l'étanchéité d'un composant rotatif (2) par rapport à un composant fixe (1), l'anneau de section rectangulaire séparant une région de surpression (3) d'une région de basse pression (16), l'anneau de section rectangulaire présentant deux extrémités opposées par rapport à la périphérie (9, 10), qui sont réalisées sous forme de joint ou de verrou (5) et qui peuvent être connectées l'une à l'autre, au moins une rainure de lubrification annulaire (7 ; 8, 8') étant réalisée au niveau d'une surface périphérique radialement interne (11) ou au niveau d'au moins une surface périphérique axiale (12, 12') de l'anneau de section rectangulaire (4, 4'), pour recevoir un lubrifiant pouvant être acheminé depuis la région de surpression (3), **caractérisé en ce que** l'au moins une rainure de lubrification annulaire (7 ; 8, 8') n'est pas réalisée de manière complètement circulaire mais présente une extrémité fermée (13, 13') ainsi qu'une extrémité ouverte (14, 14'), l'extrémité ouverte (14, 14') de la rainure de lubrification (7 ; 8, 8') se prolongeant par une région de trop-plein (6, 6') qui est en liaison d'écoulement avec une région de fuite (15, 15') du joint ou du verrou (5) .

2. Anneau de section rectangulaire à serrage interne selon la revendication 1, **caractérisé en ce que** les extrémités de l'anneau (9, 10) sont réalisées sous forme de verrou en T (5), une première extrémité de l'anneau (9) présentant une section transversale en forme de T, dont la branche plus courte (17) est disposée radialement à l'extérieur et dont la branche plus longue (18) est disposée radialement à l'intérieur et les deux branches (17, 18) forment dans la direction périphérique une saillie de l'extrémité de l'anneau (9), la deuxième extrémité de l'anneau (10) étant réalisée sous forme de logement (19) pour cette saillie, la branche longue (18) s'engageant dans le logement (19) et la branche courte (17) chevauchant radialement à l'extérieur le logement (19), et l'extrémité ouverte (14, 14') de la rainure de lubrification (7, 8) étant disposée au niveau de cette deuxième extrémité d'anneau (10) de telle sorte qu'une région de fuite (15, 15') soit réalisée au niveau de la surface périphérique radialement extérieure (24) de l'anneau de section rectangulaire (4, 4'), dans une région d'extrémité laissée ouverte du verrou en T (5), laquelle région de fuite est sollicitée avec du lubrifiant depuis la région de surpression (3) et laquelle alimente en lubrifiant la région de trop-plein (6, 6') de la rainure de lubrification (7, 8) .

3. Anneau de section rectangulaire à serrage interne selon la revendication 1 ou 2, **caractérisé en ce que** les deux extrémités d'anneau (9, 10) présentent des arêtes arrondies ou interrompues dans la direction périphérique.

4. Anneau de section rectangulaire à serrage interne selon la revendication 1 ou 2, **caractérisé en ce que** les deux extrémités d'anneau (9, 10) présentent des arêtes interrompues dans la direction périphérique.

5. Anneau de section rectangulaire à serrage interne selon l'une quelconque des revendications 1 à 4, **caractérisé en ce que** l'au moins une rainure de lubrification annulaire (7) est réalisée au niveau d'une surface périphérique radialement interne (11) de l'anneau de section rectangulaire (4), la région de trop-plein (6) étant réalisée sous la forme d'un espace en forme de fente qui s'étend au niveau de la surface périphérique interne (11) de l'anneau de section rectangulaire (4) entre l'extrémité ouverte (14) de la rainure de lubrification (7) et l'extrémité libre de la branche plus longue (18) du verrou en forme de T (5) et qui est limitée par les deux extrémités d'anneau (9, 10) ainsi que par une surface (22) de l'un des deux composants (1, 2) à étanchéifier l'un par rapport à l'autre, adjacente à la surface périphérique radialement interne (11).

6. Anneau de section rectangulaire à serrage interne selon l'une quelconque des revendications 1 à 4, **caractérisé en ce que** l'au moins une rainure de lubrification de forme annulaire (8) est réalisée au niveau d'une surface périphérique axiale (12) de l'anneau de section rectangulaire (4') qui est opposée à la région de surpression (3), la région de trop-plein (6') étant réalisée sous forme d'espace en forme de fente qui s'étend au niveau de la surface périphérique axiale (12) de l'anneau de section rectangulaire (4') entre l'extrémité ouverte (14') de la rainure de lubrification (8) et l'extrémité de la branche plus courte (17) du verrou en forme de T (5) et qui est limitée par les deux extrémités d'anneau (9, 10) ainsi que par une surface (23) de l'un des deux composants à étanchéifier l'un par rapport à l'autre (1, 2), adjacente à la surface périphérique axiale (12).

7. Anneau de section rectangulaire à serrage interne selon la revendication 6, **caractérisé en ce qu'**au niveau de la surface périphérique axiale (12) opposée à la région de surpression (3) et au niveau de la surface périphérique axiale (12') opposée, tournée vers la région de surpression (3), est à chaque fois réalisée une rainure de lubrification de forme annulaire (8, 8'), les deux rainures de lubrification (8, 8') étant en liaison d'écoulement l'une avec l'autre par le biais de la région de fuite (15').

8. Anneau de section rectangulaire à serrage interne selon l'une quelconque des revendications 1 à 7, **caractérisé en ce qu'**il est disposé en vue de réaliser l'étanchéité d'un arbre rotatif (2) par rapport à une bride fixe (1) et repose avec un jeu axial et radial dans une rainure (21) réalisée dans la bride (1), l'anneau sous l'effet de la sollicitation en pression avec une surface périphérique axiale (12) opposée à la région de surpression (3) s'appliquant par contact ou par glissement contre une surface latérale (23) de la rainure (21), et par sollicitation en pression et/ou suspension propre, s'appliquant avec une surface périphérique radialement interne (11) contre une surface extérieure (22) de l'arbre (2) par serrage ainsi que par contact ou par glissement.
